# EUROPEAN PATENT SPECIFICATION

(11) **EP 4 106 991 B1**
(45) Date of publication and mention of the grant of the patent: **20.08.2025**
(21) Application number: 21756852.6
(22) Date of filing: 22.02.2021
(51) Int. Cl.: E04D 5/10, B32B 7/06, B32B 7/12, C09J 7/24, C09J 7/30, C09J 201/02, B32B 27/36, B32B 27/08, B32B 27/20, B32B 5/02, B32B 27/32, B32B 27/10, B32B 27/12, B32B 27/30, B32B 37/12, E04D 11/02, E04D 5/06

(54) **SELF-ADHERING ROOFING MEMBRANE COMPOSITES**
SELBSTKLEBENDE DACHBAHNKOMPOSITE
COMPOSITES MEMBRANAIRES AUTOADHÉSIFS DE TOITURE

(30) Priority: 21.02.2020 US 202062979781 P
(43) Date of publication of application: 28.12.2022
(73) Proprietor: Holcim Technology Ltd, 6300 Zug (CH)
(72) Inventor: HUBBARD, Michael J., Nashville, Tennessee 37214 (US); YANG, Yuzhen, Nashville, Tennessee 37214 (US)
(74) Representative: Kraus & Lederer PartGmbB
(86) International application number: PCT/US2021/019027
(87) International publication number: WO 2021/168404

(56) References cited:
- US-A1- 2006 096 213
- US-A1- 2007 264 471
- US-A1- 2014 205 820
- US-A1- 2017 114 543
- US-A1- 2017 114 543
- US-B2- 10 260 237
- US-B2- 9 562 174

## Description

This application claims the benefit of U.S. Provisional Application Serial No. 62/979,781 filed on February 21, 2020.

### FIELD OF THE INVENTION

Embodiments of the present invention are directed toward membrane composites that include a pressure-sensitive adhesive layer for adhering the composite to a roof deck to form a roofing system. According to embodiments of the invention, the membrane according to claim 1 is a roofing membrane that includes functionalized polymer in the layer or surface of the membrane that contacts the pressure-sensitive adhesive layer.

### BACKGROUND OF THE INVENTION

Flat or low-sloped roofs are often covered with polymeric membranes. Common among the membranes that have the mechanical properties needed to be technologically useful are thermoset membranes, such as those prepared with EPDM rubber, or thermoplastic membranes, such as those prepared with ethylene-propylene reactor copolymers.

U.S. Publ. No. 2016/0230392 teaches roofing membrane composites that include a UV-cured polyacrylate adhesive layer. These membranes are useful for preparing roofing membrane systems by using peel-and-stick techniques. This technology overcame problems associated with the prior art whereby adhesion to the roof substrate was achieved at relatively low temperatures while maintaining adhesion to the roof substrate at relatively high temperatures. The focus of this technology therefore sought to address bonding issues between the adhesive and the roof substrate, which was previously the point of failure.

US 2017/114543 A1 discloses another composite membrane comprising an adhesive layer. Since roofing membranes that can be installed by peel-and-stick techniques are highly useful, there is a continued need to improve upon these systems.

### SUMMARY OF THE INVENTION

The present invention provides a composite membrane according to claim 1.

### BRIEF DESCRIPTION OF THE DRAWINGS

Fig. 1 is a perspective view of a composite membrane according to embodiments of the present invention.
Fig. 2A is a perspective view of a composite membrane including a multi-layered membrane according to embodiments of the present invention.
Fig. 2B is a perspective view of a composite membrane including a multi-layered membrane according to embodiments of the present invention.
Fig. 3 is a perspective, cross sectional view of a roof assembly according to embodiments of the present invention.

### DETAILED DESCRIPTION OF ILLUSTRATIVE EMBODIMENTS

Embodiments of the present invention are based, at least in part, on the discovery of a composite membrane that includes a pressure-sensitive adhesive layer adhered to a surface of a membrane panel that includes a functionalized polymer at or near the surface where the adhesive layer is adhered. The invention proposes a composite membrane according to claim 1. According to the invention, the pressure-sensitive adhesive layer includes a cross-linked polyacrylate, and the layer of the membrane panel to which the adhesive is adhered includes a non-polar thermoplastic polymer. It has unexpectedly been discovered that the presence of the functionalized polymer provides improved adhesion between the adhesive layer and the surface of the membrane panel, especially upon heat aging, which is important in roofing applications. Furthermore, it has advantageously been discovered that the functionalized polymer can be included within at least a portion of the membrane panel without having a deleterious impact on the other performance attributes of the membrane panel or composite.

### COMPOSITE CONSTRUCTION

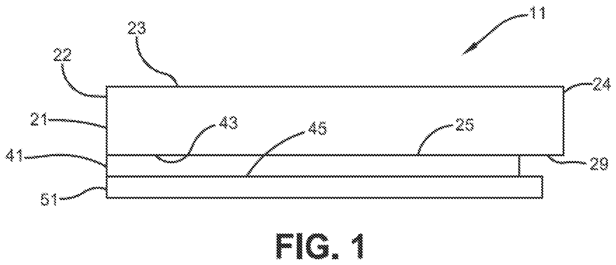

The membrane composites of the present invention, which can also be referred to as composite membranes, roofing composites, roofing membrane composites, or simply composites, can be described with reference to Fig. 1. As shown, composite 11 includes a membrane portion 21, which includes a first lateral edge 22, a first planar surface 23, a second lateral edge 24, and a second planar surface 25. First planar surface 23 is intended to be exposed to the environment when installed on a roof. A pressure-sensitive adhesive layer 41, which may be referred to as PSA layer 41, is disposed on second planar surface 25. PSA layer 41 includes a first planar surface 43 that contacts surface 25 of membrane portion 21, and a second planar surface 45 that is intended to contact the substrate to which the composite is adhered. According to the present invention, membrane portion 21 includes functionalized polymer at surface 25. In one or more embodiments, a release member 51 is removably attached to surface 45 of pressure-sensitive adhesive layer 41 of composite 11.

In one or more embodiments, adhesive layer 41 is disposed on planar surface 25 of membrane portion 21 across the entire width of membrane portion 21, which width extends from first lateral edge 22 to second lateral edge 24. In other embodiments, as shown in Fig. 1, adhesive layer 41 is disposed on only a portion of surface 25 to thereby expose a portion of surface 25 at or near one or both of lateral edges 22, 24. As those skilled in the art appreciate, the exposed portion(s) (e.g. portion 29) may be referred to as lap regions, which include those portions of the membrane that are overlapped and seamed during construction of the roof (which process is described herein below). In one or more of these embodiments, adhesive layer 41 can otherwise substantially cover surface 25 (i.e. only one or more lap regions are exposed).

### MEMBRANE PANEL CONSTRUCTION

In one or more embodiments, membrane portion 21, which may also be referred to as membrane panel 21, membrane 21, or panel 21, are adapted to serve as roofing membranes. In one or more embodiments, this includes being adapted to serve as the outermost environmental barrier to a roof system. In one or more embodiments, the membranes may be flexible and capable of being rolled up for shipment. In these or other embodiments, the membranes may include fabric reinforcement, such as a scrim reinforcement. In one or more embodiments, the membrane panels are EPDM membrane panels that meet the specifications of the ASTM D-4637. In other embodiments, the membrane panels are thermoplastic membrane panels that meet the specifications of ASTM D-6878-03.

In one or more embodiments, the roofing membrane panels are characterized by conventional dimensions. For example, in one or more embodiments, the membrane panels may have a thickness of from about 500 µm to about 3 mm, in other embodiments from about 1,000 µm to about 2.5 mm, and in other embodiments from about 1,500 µm to about 2 mm. In these or other embodiments, the membrane panels of the present invention are characterized by a width of about 1 m to about 20 m, in other embodiments from about 2 m to about 18 m, and in other embodiments from about 3 m to about 15 m.

The membrane panels are polymeric membranes, which include a polymeric matrix that optionally includes one or more constituents (e.g. fillers) dispersed throughout the polymeric matrix. According to the present invention, a least a portion of the membrane panels of the invention include a functionalized polymer. These functionalized polymers may be dispersed within the polymer matrix or they may be co-continuous with the polymer matrix.

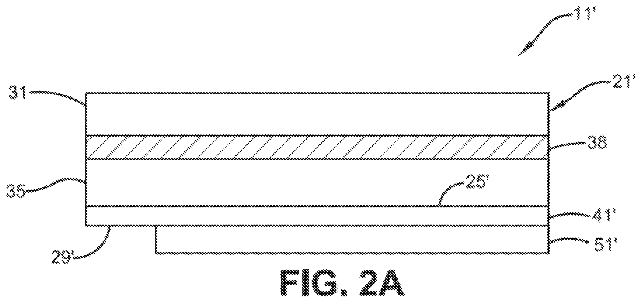

In one or more embodiments, the membrane panel may include a single integral polymeric body or it may include a multi-layered polymeric body. For example, Fig. 1 shows composite 11 including a single integral polymeric body (i.e. panel 21). In other embodiments, as shown in Fig. 2A, composite 11' includes membrane panel 21', which includes a laminate structure including first polymeric layer 31 and second polymeric layer 35, which are laminated together with an optional scrim 38 disposed between the layers. Consistent with the embodiments of Fig. 1, composite 11' includes PSA layer 41' and optional release member 51'. According to the invention, polymeric layer 35 includes functionalized polymer. Polymeric layer 31 may also include a functionalized polymer, and in other embodiments, polymeric layer 31 may be devoid or substantially devoid of functionalized polymer.

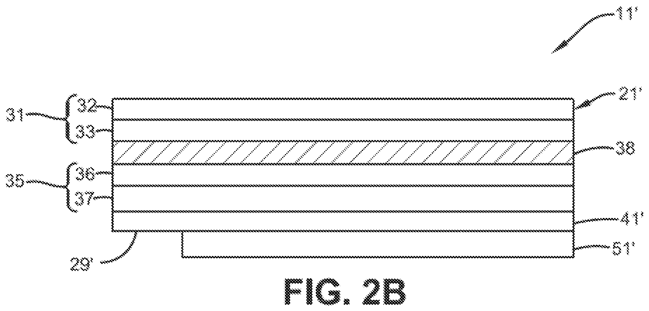

In one or more embodiments, as shown in Fig. 2B, at least one of first polymeric layer 31 and second polymeric layer 35 include coextruded layers. In this respect, U.S. Publ. Nos. 2009/0137168, 2009/0181216, 2009/0269565, 2007/0193167, and 2007/0194482 are cited. For example, polymeric layer 31 may include first coextruded layer 32 and second coextruded layer 33. Likewise, polymeric layer 35 may include first coextruded layer 36 and second coextruded layer 37. According to aspects of the invention, second coextruded layer 37 includes a functionalized polymer. The other coextruded layers may optionally include a functionalized polymer, and in other embodiments, one or more of the other coextruded layers may be devoid or substantially devoid of functionalized polymer. For example, the coextruded upper layer 32 may be devoid of the functionalized polymer.

In one or more embodiments, the thickness of coextruded layers 32 and 33 (or 36 and 37) may be the same or substantially similar. In other embodiments, the thickness of one or more of the coextruded layers (e.g. coextruded layer including functional polymer) may be thinner than the other coextruded layers (e.g. thinner than coextruded layer 36). This latter construction may provide economic benefit by minimizing the amount of the functional polymer within the overall membrane while still providing the functionalized polymer in a location that will allow it to provide adequate bonding to the adhesive.

### MEMBRANE PANEL COMPOSITION

As suggested above, the membrane panels are polymeric membrane panels, which include a polymeric matrix with one or more constituents, such as filler, optionally dispersed within the matrix. The functionalized polymer is dispersed within the polymeric matrix and/or it is co-continuous with the matrix. In one or more embodiments, the polymer forming the polymeric matrix may be referred to as the matrix polymer.

In one or more embodiments, the polymeric membrane panel includes a thermoset matrix, which may also be referred to as thermoset body or thermoset material. In other embodiments, the membrane panel includes a thermoformable matrix (i.e. capable of flow at elevated temperatures), which may also be referred to as thermoformable body or thermoformable material. In one or more embodiments, the membrane panel is an EPDM membrane (i.e. the membrane panel includes a thermoset EPDM matrix). In other embodiments, the membrane is a thermoplastic membrane panel (i.e. the panel includes a thermoplastic matrix). In yet other embodiments, the membrane panels may be formed from polyvinyl chloride (PVC) or thermoplastic elastomers (TPVs).

In one or more embodiments, the membrane panels are thermoplastic membrane panels including one or more olefinic thermoplastic polymers forming the polymeric matrix (i.e. the matrix polymer includes one or more olefinic thermoplastic polymers). In one or more embodiments, the olefinic thermoplastic polymers include ethylene-based and/or propylene-based thermoplastic polymers.

In one or more embodiments, the olefinic thermoplastic polymers include olefinic reactor copolymers, which may also be referred to as in-reactor copolymers. Reactor copolymers are generally known in the art and may include blends of olefinic polymers that result from the polymerization of ethylene and α-olefins (e.g., propylene) with sundry catalyst systems. In one or more embodiments, these blends are made by in-reactor sequential polymerization. Reactor copolymers useful in one or more embodiments include those disclosed in U.S. Patent No. 6,451,897, which is cited. Reactor copolymers, which are also referred to as TPO resins, are commercially available under the tradename HIFAX^{™} (Lyondellbassel); these materials are believed to include in-reactor blends of ethylene-propylene rubber and polypropylene or polypropylene copolymers. In one or more embodiments, the in-reactor copolymers may be physically blended with other polyolefins. For example, in reactor copolymers may be blended with linear low density polyethene.

In one or more embodiments, the olefinic thermoplastic polymers include propylene-based elastomers. In one or more embodiments, useful propylene-based elastomers include propylene-based elastomers that have isotactic propylene sequences long enough to crystallize. In this regard, U.S. Patent No. 6,927,258, and U.S. Publ. Nos. 2004/0198912 and 2010/0197844 are cited. In one or more embodiments, the propylene-based elastomer is propylene/alpha-olefin copolymer with semi-crystalline isotactic propylene segments. The alpha-olefin content (e.g., polymerized ethylene content) may range from about 5 to about 18%, or in other embodiments from about 10 to about 15%.

In one or more embodiments, the propylene-based elastomer is characterized by a melting point that is less than 110 °C and a heat of fusion of less than 75 J/g. In one embodiment, the propylene based elastomers of the composite membranes of present invention have a glass transition temperature (Tg) range of about -25 to -35 °C. The Tg as used herein is the temperature above which a polymer becomes soft and pliable, and below which it becomes hard and glassy. The propylene based plastomers and elastomers of the composite membranes of present invention have a MFR range measured at 230 °C. of between about 0.5 to about 25, and a melt temperature range of about50 to 120 °C. In one embodiment, the propylene based elastomers have a shore A hardness range of about 60 to about 90.

In one or more embodiments, the propylene-based elastomer is blended with a propylene-based thermoplastic resin, which may include a crystalline resin. In particular embodiments, the propylene-based thermoplastic resin is characterized by a melting point that is greater than 110 °C, in other embodiments greater than 120 °C, and in other embodiments greater than 130 °C, and a heat of fusion greater than 75 J/g, in other embodiments greater than 80 J/g, and in other embodiments greater than 85 J/g. In one or more embodiments, the propylene-based thermoplastic resin is stereoregular polypropylene. In one or more embodiments, the ratio of the propylene-based elastomer to the propylene-based thermoplastic resin within the blend composition may vary in the range of 1:99 to 95:5 by weight and, in particular, in the range 2:98 to 70:30 by weight.

In one embodiment, the propylene-based elastomers may have a flexural modulus range of about 500 to about 6000 psi, preferably about 1500-5000 psi (1 psi = 6895 Pa).

In one or more embodiments, the olefinic thermoplastic polymers include ethylene-based olefinic block copolymers. In general, the ethylene-based olefinic block copolymers (EBOC) include block copolymers including a first plurality of ethylene-α-olefin blocks having low α-olefin content and a second plurality of ethylene-α-olefin blocks having a high α-olefin content. For purposes of this specification, the α-olefin may be referred to as a comonomer. Also, for purposes of this specification, the first plurality may be referred to as the hard blocks since these blocks are characterized by a relatively high melt temperature, and the second plurality of blocks may be referred to as the soft blocks since these block are characterized by a low glass transition temperature. In one or more embodiments, the hard blocks are crystallizable and the soft blocks are amorphous. In one or more embodiments, the α-olefin includes C₄ or higher α-olefins. In particular embodiments, the α-olefin is selected from butane, hexene, and octene. In particular embodiments, the α-olefin is octene.

In one or more embodiments, the ethylene-based olefinic block copolymer includes hard and soft blocks alternating in (AB)ₙ pattern where A is a hard block, B is a soft block, and n is an integer greater than 1 including 2, 3, 4, 5, 10, 20, 40, 60, 80, 100, or higher.

As suggested above, the hard blocks, which may also be referred to as hard segments, have a relatively low comonomer content (i.e., α-olefin). In one or more embodiments, the comonomer content (i.e., comonomer in polymerized form) of the hard block is less than 5 wt %, in other embodiments less than 2 wt %, and in other embodiments less than 1 wt %, with the balance of the polymeric units deriving from ethylene. Accordingly, the hard segments may include greater than 95 wt %, in other embodiments greater than 98 wt %, and in other embodiments greater than 99 wt % polymeric units deriving from ethylene. In particular embodiments, the hard segments exclusively include or substantially include ethylene-derived units.

The soft block, which may also be referred to as soft segments, have a relatively high comonomer content (i.e., α-olefin). In one or more embodiments, the comonomer content (i.e., comonomer in polymerized form) of the soft block is greater than 5 wt %, in other embodiments greater than 8 wt %, in other embodiments greater than 10 wt %, in other embodiments greater than 15 wt %, in other embodiments greater than 25 wt %, in other embodiments greater than 35 wt %, in other embodiments greater than 45 wt %, and in other embodiments greater than 60 wt %, with the balance including ethylene-derived units.

In one or more embodiments, the ethylene-based olefinic block copolymers employed in the present invention are characterized by a density of less than 0.9 g/cm³, in other embodiments less than 0.89 g/cm³, in other embodiments less than 0.885 g/cm³, and in other embodiments less than 0.875 g/cm³. In these or other embodiments, the density of the ethylene-based olefinic block copolymers is greater than 0.85 g/cm³ and in other embodiments greater than 0.86 g/cm³. As the skilled person appreciates, density can be determined according to ASTM D-792.

In one or more embodiments, the ethylene-based olefinic block copolymers employed in the present invention are characterized by a melt temperature, as measured by differential scanning calorimetry as described in U.S. Publ. No. 2006/0199930, of at least 105, in other embodiments at least 110, in other embodiments at least 115, and in other embodiments at least 120 °C. In these or other embodiments, the ethylene-based olefinic block copolymers are characterized by a melt temperature of less than 130 and in other embodiments less than 125 °C.

In one or more embodiments, the first EBOC, which is characterized by a relatively low melt index, may have a melt index, as determined by ASTM D1238 or ISO 1133 (2.16 kg load at 190 °C), of less than 5 g/10 min, in other embodiments less than 2 g/10 min, and in other embodiments less than 1 g/10 min. In these or other embodiments, the melt index of the first EBOC is from about 0.1 to about 5 g/10 min, in other embodiments from about 0.3 to about 2 g/10 min, and in other embodiments from about 0.5 to about 1 g/10 min.

In one or more embodiments, the second EBOC, which is characterized by a relatively high melt index, as determined by ASTM D1238 or ISO 1133 (2.16 kg load at 190 °C), may have a melt index of greater than 5 g/10 min, in other embodiments greater than 15 g/10 min, and in other embodiments greater than 25 g/10 min. In these or other embodiments, the melt index of the second EBOC is from about 5 to about 50 g/10 min, in other embodiments from about 15 to about 40 g/10 min, and in other embodiments from about 25 to about 35 g/10 min.

In one or more embodiments, the ethylene-based olefinic block copolymers employed in the composite membranes of the present invention are characterized by a glass transition temperature, as measured by differential scanning calorimetry, of at less than 0 °C, in other embodiments less than -20 °C, in other embodiments less than -30 °C, in other embodiments less than -40 °C, and in other embodiments less than -50 °C. In these or other embodiments, the ethylene-based olefinic block copolymers are characterized by a glass transition temperature of from about -70 °C to 0 °C, or in other embodiments from about -50 °C to about 0 °C.

Useful ethylene-based olefinic block copolymers that may be employed in the present invention are known in the art as described in U.S. Patent No. 7,893,166 and 7,355,089 and U.S. Publ. No. 2010/0084158, which are cited. Useful ethylene-based olefinic block copolymers are commercially available under the tradename INFUSE (Dow Chemical Company) including those specific polymers available under the tradenames 9010 and 9900.

### FUNCTIONALIZED THERMOPLASTIC POLYMER

According to the invention, the polymeric membrane panel includes a functionalized polymer at said second planar surface, wherein the functionalized polymer is a maleated polyolefin. The functionalized polymer, which may also be referred to as a functional polymer, includes polymers with one or more functional groups. Each functional group, which may also be referred to as a functional substituent or functional moiety, includes a hetero atom. As mentioned above, the functionalized polymer is a maleated polyolefin, and the polymer can include several functional groups. In one or more embodiments, a functional group includes a polar group. Examples of polar groups include hydroxyl, carbonyl, ether, ester, halide, amine, imine, nitrile, glycidyl (e.g., epoxy ring), or isocyanate groups. Exemplary groups containing a carbonyl moiety include carboxylic acid, anhydride, ketone, acid halide, ester, amide, or imide groups, and derivatives thereof. In one embodiment, a functional group includes a succinic anhydride group, or the corresponding acid, which may derive from a reaction (e.g., polymerization or grafting reaction) with maleic anhydride, or a β-alkyl substituted propanoic acid group or derivative thereof. In one or more embodiments, a functional group is pendant to the backbone of the hydrocarbon polymer. In these or other embodiments, a functional group may include an ester group. In specific embodiments, the ester group is a glycidyl group, which is an ester of glycidyl and a carboxylic acid. A specific example is a glycidyl methacrylate group.

In one or more embodiments, the functionalized polymer may be prepared by grafting a graft monomer to a polymer. The process of grafting may include combining, contacting, or reacting a polymer with a graft monomer. These functionalized polymers include those described in U.S. Patent Nos. 4,957,968, 5,624,999, and 6,503,984, which are cited.

In one or more embodiments, the polymer that includes the one or more functional groups may include a thermoplastic polymer. This may include solid, generally high molecular weight thermoplastic polymers including crystalline and semi-crystalline polymers. In one or more embodiments, these thermoplastic polymers may be characterized by a crystallinity of at least 20%, in other embodiments at least 25%, and in other embodiments at least 30%. Crystallinity may be determined by dividing the heat of fusion of a sample by the heat of fusion of a 100% crystalline polymer, which is assumed to be 209 joules/gram for polypropylene or 350 joules/gram for polyethylene. Heat of fusion can be determined by differential scanning calorimetry. In these or other embodiments, the thermoplastic polymers to be functionalized may be characterized by having a heat of fusion of at least 40 J/g, in other embodiments in excess of 50 J/g, in other embodiments in excess of 75 J/g, in other embodiments in excess of 95 J/g, and in other embodiments in excess of 100 J/g.

In one or more embodiments, the thermoplastic polymers, prior to grafting, may be characterized by a weight average molecular weight (M_{w}) of greater than 25 kg/mole, in other embodiments greater than 35 kg/mole, and in other embodiments greater than 40 kg/mole. In these or other embodiments, the thermoplastic polymers, prior to grafting, have a weight average molecular weight (Mw) of less than 150 kg/mole, in other embodiments less than 100 kg/mole, and in other embodiments less than 75 kg/mole. In one or more embodiments, the thermoplastic polymers, prior to grafting, have a weight average molecular weight (Mw) of from about 25 to about 150 kg/mole, in other embodiments from about 35 to about 100 kg/mole, in other embodiments from about 40 to about 75 kg/mole, in other embodiments from about 100 kg/mole to about 2,000 kg/mole, and in other embodiments from about 300 kg/mole to about 600 kg/mole. They may also characterized by a number-average molecular weight (Mₙ) of about 80 kg/mole to about 800 kg/mole, and in other embodiments about 90 kg/mole to about 200 kg/mole. Molecular weight may be determined by gel permeation chromatography (GPC) calibrated using polystyrene standards.

In one or more embodiments, these thermoplastic polymer, prior to grafting, may be characterized by a melt flow of from about 0.3 to about 2,000 dg/min, in other embodiments from about 0.5 to about 1,000 dg/min, and in other embodiments from about 1 to about 1,000 dg/min, per ASTM D-1238 at 230 °C and 2.16 kg load.

In one or more embodiments, these thermoplastic resins, prior to grafting, may have a melt temperature (Tₘ) that is from about 110 °C to about 250 °C, in other embodiments from about 120 to about 170 °C, and in other embodiments from about 130 °C to about 165 °C. In one or more embodiments, they may have a crystallization temperature (T_{c}) of these optionally at least about 75 °C, in other embodiments at least about 95 °C, in other embodiments at least about 100 °C, and in other embodiments at least 105 °C, with one embodiment ranging from 105 ° to 115 °C.

Exemplary thermoplastic polymers that may be grafted include polyolefins, polyolefin copolymers, and non-olefin thermoplastic polymers. According to the invention, the functionalized polymer is a maleated polyolefin. Polyolefins may include those thermoplastic polymers that are formed by polymerizing ethylene or α-olefins such as propylene, 1-butene, 1-hexene, 1-octene, 2-methyl-1-propene, 3-methyl-1-pentene, 4-methyl-1-pentene, 5-methyl-1-hexene, and mixtures thereof. Copolymers of ethylene and propylene and ethylene and/or propylene with another α-olefin such as 1-butene, 1-hexene, 1-octene, 2-methyl-1-propene, 3-methyl-1-pentene, 4-methyl-1-pentene, 5-methyl-1-hexene or mixtures thereof is also contemplated. Other polyolefin copolymers may include copolymers of olefins with styrene such as styrene-ethylene copolymer or polymers of olefins with α,β-unsaturated acids, α,β-unsaturated esters such as polyethylene-acrylate copolymers. Non-olefin thermoplastic polymers may include polymers and copolymers of styrene, α,β-unsaturated acids, α,β-unsaturated esters, and mixtures thereof. For example, polystyrene, polyacrylate, and polymethacrylate may be functionalized. In other embodiments, the polymer bearing the functional group may be polyvinyl acetate (PVA). Again, in order to produce a composite membrane according to the invention, the resulting functionalized polymer should be a maleated polyolefin, other embodiments would not fall within the scope of the claimed invention.

These homopolymers and copolymers may be synthesized by using an appropriate polymerization technique known in the art. These techniques may include conventional Ziegler-Natta, type polymerizations, catalysis employing single-site organometallic catalysts including, but not limited to, metallocene catalysts, and highpressure free radical polymerizations.

In one or more embodiments, the degree of functionalization of the functionalized thermoplastic polymer may be recited in terms of the weight percent of the pendent functional moiety based on the total weight of the functionalized polymer, which may be referred to as weight percent functionalization. In one or more embodiments, the functionalized thermoplastic polymer may include at least 0.2% by weight, in other embodiments at least 0.4% by weight, in other embodiments at least 0.6% by weight, and in other embodiments at least 1.0 weight percent functionalization, in these or other embodiments, the functionalized thermoplastic polymers may include less than 5% by weight, in other embodiments less than 3% by weight, and in other embodiments less than 2% by weight functionalization. In one or more embodiments, the functionalized thermoplastic polymer may include from about 0.2 to about 5, in other embodiments from about 0.4 to about 3, and in other embodiments from about 0.6 to about 2.5% by weight functionalization.

In one or more embodiments, the degree of functionalization can be quantified based upon acid number. In one or more embodiments, the functionalized thermoplastic polymer may be characterized by an acid number of greater than 10, in other embodiments greater than 12, and in other embodiments greater than 14 mg KOH/g. In these or other embodiments, the functionalized thermoplastic polymer may be characterized by an acid number of less than 20, in other embodiments less than 18, and in other embodiments less than 16 mg KOH/g. In one or more embodiments, the functionalized thermoplastic polymer may be characterized by an acid number of from about 10 to about 20 mg KOH/g, in other embodiments from about 12 to about 18 mg KOH/g, and in other embodiments from about 14 to about 16 mg KOH/g.

In one or more embodiments, the degree of functionalization of the functionalized thermoplastic polymer may be recited in terms of the moles of the pendent functional moiety based on the total weight of the functionalized polymer, which may be recited as mmol of functional group per gram of polymer. In one or more embodiments, the functionalized thermoplastic polymer may include at least 50, in other embodiments at least 60, in other embodiments at least 70, and in other embodiments at least 80 mmol of functional groups per gram of polymer. In these or other embodiments, the functionalized thermoplastic polymers may include less than 500, in other embodiments less than 250, and in other embodiments less than 150 mmol of functional groups per gram of polymer. In one or more embodiments, the functionalized thermoplastic polymer may include from about 50 to about 200, in other embodiments from about 60 to about 150, and in other embodiments from about 70 to about 130 mmol of functional groups per gram of polymer.

In one or more embodiments, where the functionalized thermoplastic polymer is a functionalized propylene-based polymer, it can be characterized by a melt flow rate of from about 20 to about 2,000 dg/min, in other embodiments from about 100 to about 1,500 dg/min, and in other embodiments from about 150 to about 750 dg/min, per ASTM D-1238 at 230 °C and 2.16 kg load. In one or more embodiments, where the functionalized thermoplastic polymer is a functionalized ethylene-based polymer, it can be characterized by a melt flow index of from about 0.2 to about 2,000 dg/min, in other embodiments from about 1 to about 1,000 dg/min, and in other embodiments from about 5 to about 100 dg/min, per ASTM D-1238 at 190 °C and 2.16 kg load.

In one or more embodiments, the functionalized thermoplastic polymer is a maleic anhydride grafted polypropylene. Functionalized thermoplastic polymers are commercially available. For example, maleated propylene-based polymers may be obtained under the tradename FUSABOND^{™} (Dow), ORVEC (Arkema), POLYBOND^{™} (Crompton), EXXELOR^{™} (ExxonMobil), and G Polymers (Eastman). Another example includes polymers or oligomers including one or more glycidyl groups such as LOTADER^{™} AX8950 (Arkema). Still other examples include LOTRYL and EVATANE (Arkema).

### OTHER CONSTITUENTS

As suggested above, the membrane panels may include other constituents besides the matrix polymer and the functionalized polymer. These other constituents may be dispersed within the thermoplastic matrix. These constituents may include, for example, flame retardants, stabilizers, pigments, and fillers.

In one or more embodiments, useful flame retardants include and compound that will increase the burn resistivity, particularly flame spread such as tested by UL 94 and/or UL 790, of the laminates of the membranes of the present invention. Useful flame retardants include those that operate by forming a char-layer across the surface of a specimen when exposed to a flame. Other flame retardants include those that operate by releasing water upon thermal decomposition of the flame retardant compound. Useful flame retardants may also be categorized as halogenated flame retardants or non-halogenated flame retardants.

Exemplary non-halogenated flame retardants include magnesium hydroxide, aluminum trihydrate, zinc borate, ammonium polyphosphate, melamine polyphosphate, and antimony oxide (Sb₂O₃). Magnesium hydroxide (Mg(OH)₂) is commercially available under the tradename Vertex^{™} 60, ammonium polyphosphate is commercially available under the tradename Exolite^{™} AP 760 (Clarian), which is sold together as a polyol masterbatch, melamine polyphosphate is available under the tradename Budit^{™} 3141 (Budenheim), and antimony oxide (Sb₂O₃) is commercially available under the tradename Fireshield^{™}. Those flame retardants from the foregoing list that are believed to operate by forming a char layer include ammonium polyphosphate and melamine polyphosphate.

In one or more embodiments, treated or functionalized magnesium hydroxide may be employed. For example, magnesium oxide treated with or reacted with a carboxylic acid or anhydride may be employed. In one embodiment, the magnesium hydroxide may be treated or reacted with stearic acid. In other embodiments, the magnesium hydroxide may be treated with or reacted with certain silicon-containing compounds. The silicon-containing compounds may include silanes, polysiloxanes including silane reactive groups. In other embodiments, the magnesium hydroxide may be treated with maleic anhydride. Treated magnesium hydroxide is commercially available. For example, Zerogen^{™} 50.

Examples of halogenated flame retardants may include halogenated organic species or hydrocarbons such as hexabromocyclododecane or N,N'-ethylene-bis-(tetrabromophthalimide). Hexabromocyclododecane is commercially available under the tradename CD-75P^{™} (ChemTura). N,N'-ethylene-bis-(tetrabromophthalimide) is commercially available under the tradename Saytex^{™} BT-93 (Albemarle).

In one or more embodiments, the use of char-forming flame retardants (*e.g.* ammonium polyphosphate and melamine polyphosphate) has unexpectedly shown advantageous results when used in conjunction with nanoclay within the cap layer of the laminates of the membranes of the present invention. It is believed that there may be a synergistic effect when these compounds are present in the cap layer. As a result, the cap layer of the laminates of the composite membranes of certain embodiments of the present invention are devoid of or substantially devoid of halogenated flame retardants and/or flame retardants that release water upon thermal decomposition. Substantially devoid referring to that amount or less that does not have an appreciable impact on the laminates, the cap layer, and/or the burn resistivity of the laminates.

### OTHER INGREDIENTS

The thermoplastic membranes of the present invention may also include other ingredients such as those that are convention in thermoplastic membranes. For example, other useful additives or constituents may include flame retardants, stabilizers, pigments, and fillers.

In one or more embodiments, the membranes of the invention may include stabilizers. Stabilizers may include one or more of a UV stabilizer, an antioxidant, and an antiozonant. UV stabilizers include Tinuvin^{™} 622. Antioxidants include Irganox^{™} 1010.

### AMOUNTS

In one or more embodiments, the one or more layers of the membranes of the present invention that include functionalized polymer may include greater than 0.5 weight percent, in other embodiments greater than 1.0 weight percent, in other embodiments greater than 1.5 weight percent, in other embodiments greater than 2.0 weight percent, in other embodiments greater than 2.5 weight percent, in other embodiments greater than 3 weight percent, in other embodiments greater than 5 weight percent, and in other embodiments greater than 7 weight percent of the functionalized polymer (e.g. hydroxyl-bearing polymer) based on the entire weight of the layer that includes the functionalized polymer. In one or more embodiments, the one or more layers of the membranes of the present invention that include the functionalized polymer may include less than 50 weight percent, in other embodiments less than 25 weight percent, and in other embodiments less than 15 weight percent of the functionalized polymer based on the entire weight of the layer that includes the functionalized polymer. In one or more embodiments, the one or more layers of the thermoplastic membranes that include the functionalized polymer may include from about 0.5 to about 50, in other embodiments from about 1.0 to about 25, in other embodiments from about 1.5 to about 15, in other embodiments from about 2.0 to about 12, in other embodiments from about 2.5 to about 10, in other embodiments from about 0.5 to about 2.9, and in other embodiments from about 0.7 to about 2.5 weight percent of the functionalized polymer based upon the entire weight of the layer that includes the functionalized polymer.

As suggested above, the other layers of the membranes may be substantially devoid of functionalized polymer, which refers to that amount or less that would otherwise have an appreciable impact on the membranes or practice of this invention. In one more embodiments, the other layers of the membranes (i.e. those layers not in contact with the adhesive layers), may include less than less than 1 weight percent, in other embodiments less than 0.1 weight percent, and in other embodiments less than 0.01 weight percent of the functionalized polymer based on the entire weight of the layer that includes the functionalized polymer.

### UV-CURABLE HOT-MELT PRESSURE-SENSITIVE ADHESIVE

The pressure-sensitive adhesive layer (i.e. layer 41) is a cured pressure-sensitive adhesive (i.e. a cross-linked adhesive). In sub-embodiments thereof, this cured pressure-sensitive adhesive layer is formed from a curable hot-melt adhesive. In other words, and as will be described in greater detail below, an uncured adhesive composition is applied to the membrane as a hot-melt composition (i.e. the composition is heated and applied as a flowable composition in the absence or appreciable absence of solvent), and then the composition is subsequently crosslinked (i.e. cured) to form the cured pressure-sensitive layer. According to the invention, the cross-linked adhesive layer includes a cross-linked polyacrylate polymer network.

The cured pressure-sensitive adhesive layer may be an acrylic-based hot-melt adhesive. The adhesive is a polyacrylate such as a polyacrylate elastomer. In one or more embodiments, useful polyacrylates include one or more units defined by the formula: 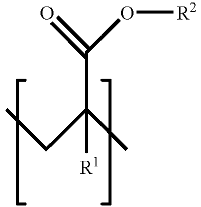 where each R¹ is individually hydrogen or a hydrocarbyl group and each R² is individually a hydrocarbyl group. In the case of a homopolymer, each R¹ and R², respectively, throughout the polymer are same in each unit. In the case of a copolymer, at least two different R¹ and/or two different R² are present in the polymer chain.

In one or more embodiments, hydrocarbyl groups include, for example, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group containing in the range of from 1 carbon atom, or the appropriate minimum number of carbon atoms to form the group, up to about 20 carbon atoms. These hydrocarbyl groups may contain heteroatoms including, but not limited to, nitrogen, oxygen, boron, silicon, sulfur, and phosphorus atoms. In particular embodiments, each R² is an alkyl group having at least 4 carbon atoms. In particular embodiments, R¹ is hydrogen and R² is selected from the group consisting of butyl, 2-ethylhexyl, and mixtures thereof.

In one or more embodiments, the polyacrylate elastomers that are useful as adhesives in the practice of this invention may be characterized by a glass transition temperature (Tg) of less than 0 °C, in other embodiments less than -20 °C, in other embodiments less than -30 °C. In these or other embodiments, useful polyacrylates may be characterized by a Tg of from about -70 to about 0 °C, in other embodiments from about -50 to about -10 °C, and in other embodiments from about -40 to about -20 °C.

In one or more embodiments, the polyacrylate elastomers that are useful as adhesives in the practice of this invention may be characterized by a number average molecular weight of from about 90 to about 800 kg/mole, in other embodiments from about 100 to about 350 kg/mole, in other embodiments from about 100 to about 700 kg/mole, in other embodiments from about 150 to about 270 kg/mole, in other embodiments from about 120 to about 600 kg/mole, and in other embodiments from about 180 to about 250 kg/mole.

In one or more embodiments, the polyacrylate elastomers that are useful as adhesives in the practice of this invention may be characterized by a Brookfield viscosity at 150 °C of from about 10,000 to about 200,000 cps, in other embodiments from about 30,000 to about 60,000 cps, in other embodiments from about 30,000 to about 170,000 cps, in other embodiments from about 25,000 to about 150,000 cps, in other embodiments from about 30,000 to about 60,000 cps, and in other embodiments from about 40,000 to about 50,000 cps.

Specific examples of polyacrylate elastomers that are useful as adhesives in the practice of the present invention include poly(butylacrylate), and poly(2-ethylhexylacrylate). These polyacrylate elastomers may be formulated with photoinitiators, solvents, plasticizers, and resins such as natural and hydrocarbon resins. The skilled person can readily formulate a desirable adhesive composition. Useful adhesive compositions are disclosed, for example, in U.S. Patent Nos. 6,720,399, 6,753,079, 6,831,114, 6,881,442, and 6,887,917, which are cited.

In other embodiments, the polyacrylate elastomers may include polymerized units that serve as photoinitiators. These units may derive from copolymerizable photoinitiators including acetophenone or benzophenone derivatives. These polyacrylate elastomers and the adhesive compositions formed therefrom are known as disclosed in U.S. Patent Nos. 7,304,119 and 7,358,319, which are cited.

Useful adhesive compositions are commercially available in the art. For example, useful adhesives include those available under the tradename acResin (BASF), those available under the tradename AroCure (Ashland Chemical), and NovaMeltRC (NovaMelt). In one or more embodiments, these hot-melt adhesives may be cured (i.e., crosslinked) by UV light.

In one or more embodiments, the hot-melt adhesive is at least partially cured after being applied to the membrane, as will be discussed in greater detail below. In one or more embodiments, the adhesive is cured to an extent that it is not thermally processable in the form it was prior to cure. In these or other embodiments, the cured adhesive is characterized by a cross-linked infinite polymer network. While at least partially cured, the adhesive layer of one or more embodiments is essentially free of curative residue such as sulfur or sulfur crosslinks and/or phenolic compounds or phenolic-residue crosslinks.

In one or more embodiments, the degree of cure throughout the adhesive layer (i.e., adhesive layer 23 from first lateral edge 19 to second lateral edge 21) has a substantially consistent degree of cure. In one or more embodiments, the degree of cure throughout the entire adhesive layer varies by no more than 10%, in other embodiments by no more than 5%, and in other embodiments by no more than 1%. In one or more embodiments, the degree of cure is substantially consistent, which refers to an unappreciable variation in the cure state. In one or more embodiments, the cure state of the entire adhesive layer, which for example runs from first lateral edge 19 to second lateral edge 21, can be quantified based upon gel content. As a skilled person appreciates, gel content can be determined based upon the level of insoluble material following solvent extraction, which for purposes of this specification refers to solvent extraction using THF at its boiling point following four hours of extraction. These extraction techniques can be performed, for example, using Soxhlet extraction devices. In one or more embodiments, the gel content of the cured adhesive layer, based upon a THF extraction at the boiling point of THF after four hours, is at least 50%, in other embodiments at least 55%, and in other embodiments at least 60% by weight. In these or other embodiments, the gel content is less than 90%, in other embodiments less than 85%, and in other embodiments less than 80%. In one or more embodiments, the gel content is from about 50% to about 90%, in other embodiments from about 55% to about 85%, and in other embodiments from about 60% to about 80% by weight.

As indicated above, the pressure-sensitive adhesive, in its cured stated, provides sufficient tack to allow the membrane composites of this invention to be used in roofing systems that meet industry standards for wind uplift resistance. In one or more embodiments, this tack may be quantified based upon the peel strength when adhered to another membrane in accordance with ASTM D-1876-08. In one or more embodiments, the cured pressure-sensitive adhesive of the present invention is characterized by a peel strength, according to ASTM D-1876-08, of at least 1.8 lbf/in, in other embodiments at least 3.6 lbf/in, in other embodiments at least 8.0 lbf/in, in other embodiments at least 15 lbf/in, and in other embodiments at least 20 lbf/in (wherein 1 lbf = 0.453 kg, 1 inch = 2.54 cm and 1 lbf/in = 175 N/m).

Similarly, the tack of the pressure-sensitive adhesive, in its cured state, may be quantified based upon the peel strength when adhered to a construction board (e.g. insulation board) having a kraft paper facer in accordance with ASTM D-903-98 (2010). In one or more embodiments, the cured pressure-sensitive adhesive of the present invention is characterized by a peel strength, according to ASTM D-903-98 (2010) using an insulation board with kraft paper facer, of at least 1.5 lbf/in, in other embodiments at least 2.0 lbf/in, in other embodiments at least 2.5 lbf/in, in other embodiments at least 3.0 lbf/in, and in other embodiments at least 3.5 lbf/in.

In one or more embodiments, the thickness of the pressure-sensitive adhesive layer (e.g. layer 23) may be at least 15 µm, in other embodiments at least 30 µm, in other embodiments at least 45 µm, and in other embodiments at least 60 µm. In these or other embodiments, the thickness of the pressure-sensitive adhesive layer may be at most 1000 µm, in other embodiments at most 600 µm, in other embodiments at most 300 µm, in other embodiments at most 150 µm, and in other embodiments at most 75 µm. In one or more embodiments, the thickness of the pressure-sensitive adhesive layer may be from about 15 µm to about 600 µm, in other embodiments from about 15 µm to about 1000 µm, in other embodiments from about 30 µm to about 300 µm, and in other embodiments from about 45 µm to about 150 µm.

### RELEASE MEMBER

In one or more embodiments, the release member (e.g. release member 53), which may also be referred to as a release liner or release paper, may include a polymeric film or extrudate, or in other embodiments it may include a cellulosic substrate. In one or more embodiments, the polymeric film and/or cellulosic substrate can carry a coating or layer that allows the polymeric film and/or cellulosic substrate to be readily removed from the adhesive layer after attachment. This polymeric film or extrudate may include a single polymeric layer or may include two or more polymeric layers laminated or coextruded to one another.

Suitable materials for forming a release member that is a polymeric film or extrudate include polypropylene, polyester, high-density polyethylene, medium-density polyethylene, low-density polyethylene, polystyrene or high-impact polystyrene. The coating or layer applied to the film and/or cellulosic substrate may include a silicon-containing or fluorine-containing coating. For example, a silicone oil or polysiloxane may be applied as a coating. In other embodiments, hydrocarbon waxes may be applied as a coating. As the skilled person will appreciate, the coating, which may be referred to as a release coating, can be applied to both planar surfaces of the film and/or cellulosic substrate. In other embodiments, the release coating need only be applied to the planar surface of the film and/or cellulosic substrate that is ultimately removably mated with the adhesive layer.

In one or more embodiments, the release member is characterized by a thickness of from about 15 to about 80 µm, in other embodiments from about 18 to about 75 µm, and in other embodiments from about 20 to about 50 µm.

### CHARACTERISTICS OF COMPOSITE

In one more embodiments, the composites of the present invention may be characterized by a peel strength according to Pressure Sensitive Tape Council (PSTC) 101 (alternatively ASTM D3330) Method B, which uses a stainless steel plate as a substrate. Advantageously, practice of the present provides a composite that, when tested according to test methods, provides a mode of failure between the pressure-sensitive adhesive and the steel plate, not between the pressure-sensitive adhesive and the membrane panel. In one or more embodiments, the peel strength of the layer of pressure-sensitive adhesive to the membrane panel, per PSTC 101 Method A on stainless steel, is greater than 4, in other embodiments greater than 5.0, in other embodiments greater than 5.5, in other embodiments greater than 6.0, in other embodiments greater than 6.5, in other embodiments greater than 7.0, and in other embodiments greater than 7.5 pounds per lineal inch (pli) (wherein 1 lbf = 0.453 kg and 1 inch = 2.54 cm), with the mode of failure being at the interface between the steel substrate and the pressure-sensitive adhesive layer.

### PREPARATION OF COMPOSITE

In one or more embodiments, the composites of the present invention may be prepared by employing generally conventional techniques. For example, the various ingredients (e.g. matrix polymer, functionalized polymer, and filler) can be separately fed into an extruder and pelletized or directly extruded into membrane or laminate sheet. In other embodiments, the various ingredients can be combined and mixed within a mixing apparatus such as an internal mixer and then subsequently fabricated into membrane sheets or laminates.

In one or more embodiments, the membranes of the present invention may be prepared by extruding a polymeric composition into a sheet. Multiple sheets may be extruded and joined to form a laminate. A membrane including a reinforcing layer may be prepared by extruding at least one sheet on and/or below a reinforcement (e.g., a scrim). In other embodiments, the polymeric layer may be prepared as separate sheets, and the sheets may then be calandered with the scrim sandwiched therebetween to form a laminate. In one or more embodiments, the membranes of the present invention are prepared by employing co-extrusion technology. Useful techniques include those described in co-pending U.S. Serial Nos. 11/708,898 and 11/708,903, which are cited.

Following extrusion, and after optionally joining one or more polymeric layers, or optionally joining one or more polymeric layer together with a reinforcement, the membrane may be fabricated to a desired thickness. This may be accomplished by passing the membrane through a set of squeeze rolls positioned at a desired thickness. The membrane may then be allowed to cool and/or rolled for shipment and/or storage.

Once the membrane panel is formed, the adhesive layer may be applied to a surface of the membrane panel and then cured. After curing, the release member can be applied to the adhesive layer. The composite can then be rolled, stored, shipped and installed.

In one more embodiments, the adhesive layer is applied to a surface of a membrane panel as a hot melt adhesive. After application by employing hot melt application techniques, the adhesive can be cured by applying UV radiation to the uncured adhesive layer. In one or more embodiments, the adhesive can be applied to the membrane panel as a solution or dispersion, which may include a solvent or liquid medium such as water. Once applied, the solvent is evaporated to provide the adhesive layer. Other methods for curing the adhesive include the use of other forms of electromagnetic radiation such infrared radiation (i.e. heat) or other forms of energy such as electron beam irradiation.

In alternate embodiments, the adhesive layer can be applied by employing lamination techniques (which may employ transfer film techniques). According to these embodiments, the hot melt adhesive can be first applied to a release member (e.g. as a hot melt adhesive). The adhesive can then be cured while disposed on the release member. After curing, the adhesive layer can be mated to a planar surface of the membrane panel to form the composite.

In one or more embodiments, the membranes of the present invention may also be constructed by laminating a thin sheet of polymer having dispersed therein the functionalized polymer to one or more sheets of thermoplastic membrane. For example, a thin film of polymer having the functionalized polymer dispersed therein may be laminated to a conventional thermoplastic membrane or to a component (i.e., the lower layer) of a conventional thermoplastic membrane. The thin sheet having the functionalized polymer dispersed therein may have a thickness of about 2 mils to about 20 mils (1 mil = 0.0254 mm), or in other embodiments from about 4 mils to about 12 mils.

### INSTALLATION OF COMPOSITE/CONSTRUCTION OF ROOF SYSTEM

The membranes of one or more embodiments of the present invention are useful in a number of applications. In one embodiment, the membranes may be useful for roofing membranes that are useful for covering flat or low-sloped roofs. In other embodiments, the membranes may be useful as geomembranes. Geomembranes include those membranes employed as pond liners, water dams, animal waste treatment liners, and pond covers.

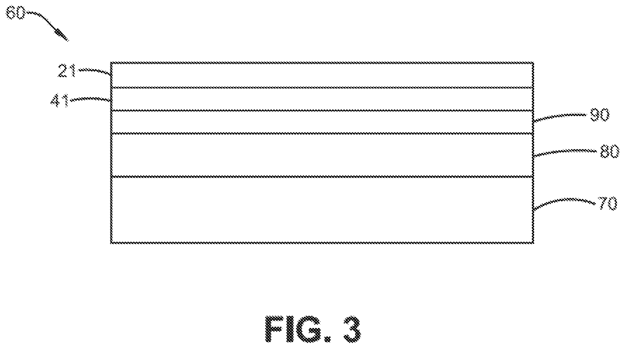

As described above, the membranes of one or more embodiments of the present invention may be employed as roofing membranes. These membranes include thermoplastic roofing membranes including those that meet the specifications of ASTM D-6878-03. These membranes maybe employed to cover flat or low/sloped roofs. These roofs are generally known in the art as disclosed in U.S. Serial Nos. 60/586,424 and 11/343,466, and International Application No. PCT/US2005/024232, which are cited. As shown in Fig. 3, a flat or low-sloped roof assembly 60 may include a roof deck 70, and optional insulation layer 80, and optional coverboard layer 90, and membrane 21, which is adhered to the underlying substrate through adhesive layer 41.

Advantageously, the membranes of the present invention can be used to prepare adhered roofing systems by using peel-and-stick techniques. Advantageously, the process can be used to construct a roofing system meeting the standards of UL and Factory Mutual for wind uplift. The skilled person understands that the pressure-sensitive adhesive layer is used to secure the membrane to the roof substrate. In particular embodiments, the adhesive can also be used to seam adjacent membranes to each other (i.e. form a lap seam). In other embodiments, such as where the adhesive is not applied in the lap region, adjacent membranes can be heat welded to each other (e.g. in the situation of thermoplastic membranes). Those skilled in the art also appreciate that installation and seaming may include seam preparation such as priming prior to seaming. Also, once a seam is formed, the seam can be further treated, such as by applying a sealant to the edge of the seam.

As noted above, the substrate to which the adhesive composition is applied may include a roof deck, which may include steel, concrete, and/or wood. In other embodiments, the adhesive composition may be applied to insulation materials, such as insulation boards and cover boards. As those skilled in the art appreciate, insulation boards and cover boards may carry a variety of facer materials including, but not limited to, paper facers, fiberglass-reinforced paper facers, fiberglass facers, coated fiberglass facers, metal facers such as aluminum facers, and solid facers such as wood. In yet other embodiments, the adhesive composition may be applied to existing membranes. These existing membranes may include cured rubber systems such as EPDM membranes, thermoplastic polymers systems such as TPO membranes, or asphalt-based systems such as modified asphalt membranes and/or built roof systems. Advantageously, practice of the present invention provides adhesion to asphalt-based substrates by offering sufficient oil resistance, which is required to maintain sufficient adhesion to asphalt systems. It is underlined that the present invention is defined by the claims and concerns composite membranes with an adhesive layer.

In one or more embodiments, the roof substrate may include a roof deck. Practice of this invention is not limited by the selection of any particular roof deck. Accordingly, the roofing systems herein can include a variety of roof decks. Exemplary roof decks include concrete pads, steel decks, wood beams, and foamed concrete decks.

In one or more embodiments, the roof substrate may include an insulation board or cover board. Practice of this invention is likewise not limited by the selection of any particular insulation board. Several insulation materials can be employed including polyurethane or polyisocyanurate cellular materials. These boards are known as described in U.S. Patent Nos. 6,117,375, 6,044,604, 5,891,563, 5,573,092, U.S. Publication Nos. 2004/0109983, 2003/0082365, 2003/0153656, 2003/0032351, and 2002/0013379, as well as U.S. Serial Nos. 10/640,895, 10/925,654, and 10/632,343, which are cited.

In other embodiments, these membranes may be employed to cover flat or low-slope roofs following a re-roofing event. In one or more embodiments, the roof substrate in a re-roofing event includes an existing membrane (i.e., reskinning). In other embodiments, the substrate includes a re-cover board. In one or more embodiments, the membranes may be employed for re-roofing as described in U.S. Publication No. 2006/0179749, which is cited.

In order to demonstrate the practice of the present invention, the following examples have been prepared and tested. The examples should not, however, be viewed as limiting the scope of the invention. The claims will serve to define the invention.

### EXPERIMENTAL SECTION

In order to demonstrate the advantages associated with the practice of the present invention, studies were conducted to compare the adhesive properties of four different adhesives to thermoplastic membranes that included a functionalized thermoplastic polymer (according to the present invention) versus similar membranes that did not include the functionalized thermoplastic polymer. Peel testing was conducted according to PSTC-101 methodologies on four different substrates as set forth in the Table.

In a first set experiments, the membranes carried a pressure-sensitive adhesive layer, which was a UV-cured polyacrylate in accordance with the present invention. In first set of comparative experiments, a solvent-borne blend of polychloroprene and SBR rubber was used as an adhesive. In another set of experiments, the adhesive was a water-born acrylic polymer adhesive.

During the peel testing, the load per inch was measured from the beginning of the test until failure, and the average load per inch (measured in lbf/inch) was calculated for each sample. The difference in average load per inch between each of the respective adhesives on four separate substrates was determined between those membranes that included the functionalized thermoplastic polymer versus those that did not include the functionalized thermoplastic polymer. The difference in average load per inch between the two membranes is set forth in the Table; in other words, the values presented in the Table represent the average peel value for a membrane with the functionalized polymer less the average peel value for the membrane without the functionalized polymer. Positive values represent those samples where the average peel value was higher due to the presence of the functionalized polymer. The differences presented in the Table are provided in foot pounds per lineal inch (lbf/in). As also shown in the Table, testing was conducted at different time intervals and aging conditions.

**Table**

| | | 24 Hours @ Room Temp | 7 Days @ Room Temp Peel @ Room Temp | 7 Days @ 158 °F Peel @ Room Temp | 7 Days in 212 °F |
|---|---|---|---|---|---|
| Substrate: PLYWOOD | | | | | |
| | Solvent Borne | -0.40 | -1.50 | -0.70 | -2.00 |
| | Water Borne | 0.40 | 0.90 | -0.10 | 0.20 |
| | PSA | -0.60 | 0.55 | 2.26 | 2.31 |

| Substrate: CONCRETE | | | | | |
|---|---|---|---|---|---|
| | Solvent Borne | -2.10 | -4.40 | -2.50 | -3.80 |
| | Water Borne | -0.10 | 0.30 | 0 | 0 |
| | PSA | -1.61 | 1.48 | 2.10 | 2.63 |

| Substrate: DENSDECK | | | | | |
|---|---|---|---|---|---|
| | Solvent Borne | -2.00 | 0.80 | -1.70 | -2.90 |
| | Water Borne | -0.70 | 0.40 | 0 | 0.10 |
| | PSA | 0.48 | -0.35 | 1.53 | 3.15 |

| Substrate: ALUMINUM | | | | | |
|---|---|---|---|---|---|
| | Solvent Borne | 3.00 | -3.40 | -2.80 | -2.00 |
| | Water Borne | 0.21 | -0.10 | 0.00 | 0.20 |
| | PSA | 3.00 | 2.56 | 4.63 | 2.44 |

The data in the Table shows that the presence of the functionalized polymer had a positive impact on adhesion (relative to membranes without the functionalized polymer) when the PSA adhesive was used, but had a negative impact when other adhesives were used (i.e. when the solvent-borne or water-borne adhesive was used). For example, and with reference to the aluminum substrate, the presence of the functionalized polymer resulted in an average peel value 2.44 lbf/in greater than when the functionalized polymer was not present for samples tested after 7 days ageing at 212 F. On the other hand, the presence of the functionalized polymer gave rise to an average peel value 2.00 lbf/in less than when the functionalized polymer was not present.

## Claims

1. A composite membrane ( 11, 11')comprising:
( i) a polymeric membrane panel ( 21, 21') said panel having first ( 23)and second ( 25)planar surfaces;
( ii) a cross-linked adhesive layer ( 41, 41')disposed on said second planar surface ( 25)of said polymeric membrane panel ( 21, 21') said cross-linked adhesive layer ( 41, 41')having first ( 43)and second ( 45)planar surfaces, where said first planar surface ( 43)of said cross-linked adhesive layer ( 41, 41')is in contact with said second planar surface ( 25) of said polymeric membrane panel ( 21, 21') and
( iii) an optional release member ( 51, 51')disposed on said second planar surface ( 45)of said cross-linked adhesive layer ( 41, 41') where said polymeric membrane panel (21, 21')includes a functionalized polymer at said second planar surface ( 25)
where the cross-linked adhesive layer includes a cross-linked polyacrylate polymer network, and
where the functionalized polymer is a maleated polyolefin.

2. The composite membrane ( 11, 11')of any of the preceding claims, where the polymeric membrane panel ( 21, 21') includes a thermoplastic polymer forming a polymeric matrix of the membrane panel ( 21, 21')

3. The composite membrane ( 11, 11')of any of the preceding claims, where the functionalized thermoplastic polymer is a maleated propylene-based polymer.

4. The composite membrane ( 11, 11')of any of the preceding claims, where the maleated polyolefin is a maleated polypropylene or a maleated polyethylene.

5. The composite membrane ( 11, 11')of any of the preceding claims, where the membrane panel (21, 21') is a multi-layered membrane including one or more coextruded layers ( 32, 33, 36, 37)

## Patentansprüche

1. Verbundmembran (11, 11'), umfassend:
(i) eine Polymermembranplatte (21, 21'), wobei die Platte eine erste (23) und eine zweite (25) planare Oberfläche aufweist;
(ii) eine vernetzte Klebstoffschicht (41, 41'), die auf der zweiten planaren Oberfläche (25) der Polymermembranplatte (21, 21') angeordnet ist, wobei die vernetzte Klebstoffschicht (41, 41') eine erste (43) und eine zweite (45) planare Oberfläche aufweist, wobei die erste planare Oberfläche (43) der vernetzten Klebstoffschicht (41, 41') in Kontakt mit der zweiten planaren Oberfläche (25) der Polymermembranplatte (21, 21') steht; und
(iii) ein optionales Trennelement (51, 51'), das auf der zweiten planaren Oberfläche (45) der vernetzten Klebstoffschicht (41, 41') angeordnet ist, wobei die Polymermembranplatte (21, 21') ein funktionalisiertes Polymer an der zweiten planaren Oberfläche (25) enthält,
wobei die vernetzte Klebstoffschicht ein vernetztes Polyacrylatpolymer-Netzwerk enthält, und
wobei das funktionalisierte Polymer ein maleiertes Polyolefin ist.

2. Verbundmembran (11, 11') nach einem der vorhergehenden Ansprüche, wobei die Polymermembranplatte (21, 21') ein thermoplastisches Polymer enthält, das eine polymere Matrix der Membranplatte (21, 21') bildet.

3. Verbundmembran (11, 11') nach einem der vorhergehenden Ansprüche, wobei das funktionalisierte thermoplastische Polymer ein Polymer auf Basis von maleiertem Propylen ist.

4. Verbundmembran (11, 11') nach einem der vorhergehenden Ansprüche, wobei das maleierte Polyolefin ein maleiertes Polypropylen oder ein maleiertes Polyethylen ist.

5. Verbundmembran (11, 11') nach einem der vorhergehenden Ansprüche, wobei die Membranplatte (21, 21') eine mehrschichtige Membran ist, die eine oder mehrere koextrudierte Schichten (32, 33, 36, 37) enthält.

## Revendications

1. Membrane composite (11, 11') comprenant :
(i) un panneau de membrane polymère (21, 21'), ledit panneau ayant une première (23) et une seconde (25) surfaces planes ;
(ii) une couche adhésive réticulée (41, 41') disposée sur ladite deuxième surface plane (25) dudit panneau de membrane polymère (21, 21'), ladite couche adhésive réticulée (41, 41') présentant une première (43) et une deuxième (45) surfaces planes, où ladite première surface plane (43) de ladite couche adhésive réticulée (41, 41') est en contact avec ladite deuxième surface plane (25) dudit panneau de membrane polymère (21, 21') ; et
(iii) un élément de séparation facultatif (51, 51') disposé sur ladite deuxième surface plane (45) de ladite couche adhésive réticulée (41, 41'), ledit panneau de membrane polymère (21, 21') comprenant un polymère fonctionnalisé sur ladite deuxième surface plane (25),
dans laquelle la couche adhésive réticulée comprend un réseau de polymères polyacrylates réticulés, et
dans laquelle le polymère fonctionnalisé est une polyoléfine maléifiée.

2. Membrane composite (11, 11') de l'une des revendications précédentes, dans laquelle le panneau de membrane polymère (21, 21') comprend un polymère thermoplastique formant une matrice polymère du panneau de membrane (21, 21').

3. Membrane composite (11, 11') de l'une des revendications précédentes, dans laquelle le polymère thermoplastique fonctionnalisé est un polymère à base de propylène maléifié.

4. Membrane composite (11, 11') de l'une des revendications précédentes, dans laquelle la polyoléfine maléifiée est un polypropylène maléifié ou un polyéthylène maléifié.

5. Membrane composite (11, 11') de l'une des revendications précédentes, dans laquelle le panneau de membrane (21, 21') est une membrane multicouche comprenant une ou plusieurs couches coextrudées (32, 33, 36, 37).
